# EUROPEAN PATENT APPLICATION

(11) **EP 0 860 131 A1**
(43) Date of publication of application: **26.08.1998**
(21) Application number: 98301295.6
(22) Date of filing: 23.02.1998
(51) Int. Cl.: A47J 29/00

(54) **Egg-cookers**

(30) Priority: 21.02.1997 GB 9703606
(71) Applicant: Malimovka, Noach Uziel, Givat-Shmuel 54042 (IL)
(72) Inventor: Malimovka, Noach Uziel, Givat-Shmuel 54042 (IL)
(74) Representative: Coles, Graham Frederick

(57) **Abstract**

A carrier (1) for an egg (E) supports it upright within a chamber (2) defined by semi-ovoid shell-members (3,4; 27,26) that stand one on the other on a water-container unit (7; 29). Steam generated within the container unit (7; 29) is injected through a nozzle (10) to surround the egg (E) and cook it, within the chamber (2). Excess steam is vented through a small hole (16) in the upper shell-member (3; 27), and water condensing in the chamber (2) may be collected in an annular channel (21, Fig 3). Instead of using the carrier (1), the egg (E) may be supported on shoulders (25, Fig 4) within the lower shell-member (26).

## Description

This invention relates to egg-cookers of the kind in which a substantially-closed chamber for close containment of an egg, has means for supporting the egg within the chamber with space between the egg and the chamber-wall, and provision is made for flow of a hot gaseous-fluid into said space to circulate therein and transfer heat to the egg to cook it.

An egg-cooker of this kind is known from EP-A-0274210 in which hot air is used to cook the egg. The hot air is circulated within the space between the chamber-wall and the egg by convection or by fan, and although an egg can be cooked in this way, problems have been found in practice in ensuring efficiency of the cooking process and general safety. Moreover the quality of the cooked egg has not been found generally to match that achievable by boiling it in water in the conventional manner.

It is an object of the present invention to provide an egg-cooker of the kind specified of improved form as compared with that using hot air.

According to the present invention an egg-cooker of the kind specified is characterised in that a container for boiling water is coupled to the chamber to pass steam into said space to cook the egg.

It has been found that by using steam instead of air, cooking of the egg can be achieved very efficiently and safely. Moreover, the dry taste experienced with an egg cooked in hot air, is avoided, and the quality of the steam-cooked egg may readily match and even surpass that achievable using conventional boiling in water.

The boiling-water container of the egg-cooker of the invention may have a flat base to enable it to stand on a substantially horizontal surface, and in these circumstances the chamber may be defined by means carried by the container to extend substantially upright with respect to said surface. Also, the container may be coupled to the chamber via a nozzle for injecting the steam into said space, and may be closed apart from the coupling. In the latter circumstances, and where the chamber is also closed to provide for build up of steam pressure, cooking can be expected to be carried out very efficiently at higher temperature and faster than normal.

The chamber, which may be substantially ovoid in form, may be defined within two interengaged cup-shape shell-members. In this case a first of the shell-members may be mounted on the container and the second may then be selectively liftable away from the first for exposing an end of the egg supported within the chamber.

An egg-cooker in accordance with the present invention will now be described, by way of example, with reference to the accompanying drawings, in which:
Figures 1 and 2 are illustrative in sectional side-elevation and exploded form, respectively, of the egg-cooker according to the invention; and
Figures 3 and 4 are illustrative of modifications of the egg-cooker of Figures 1 and 2.

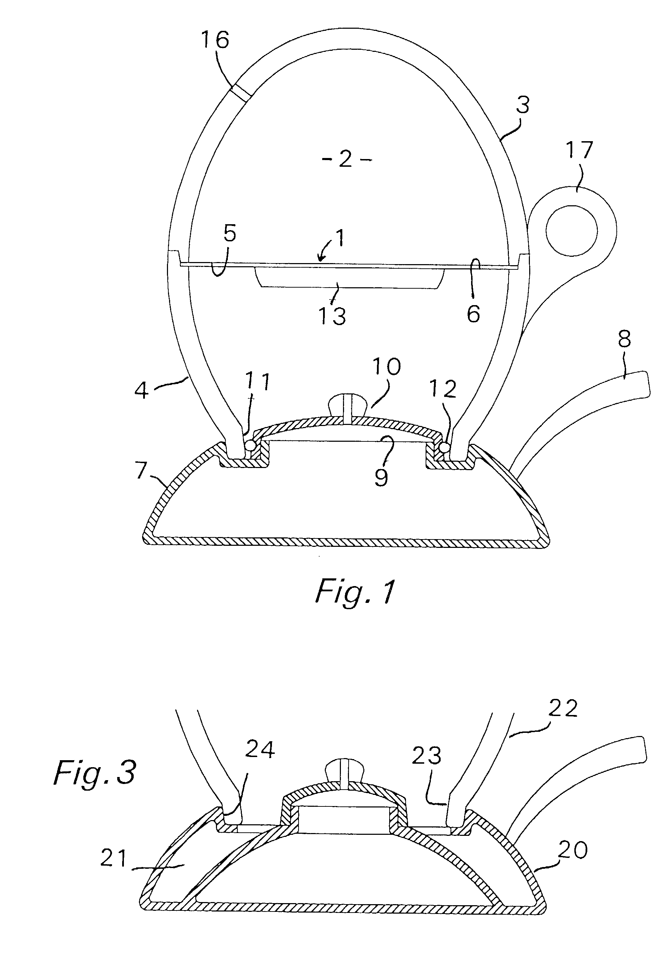

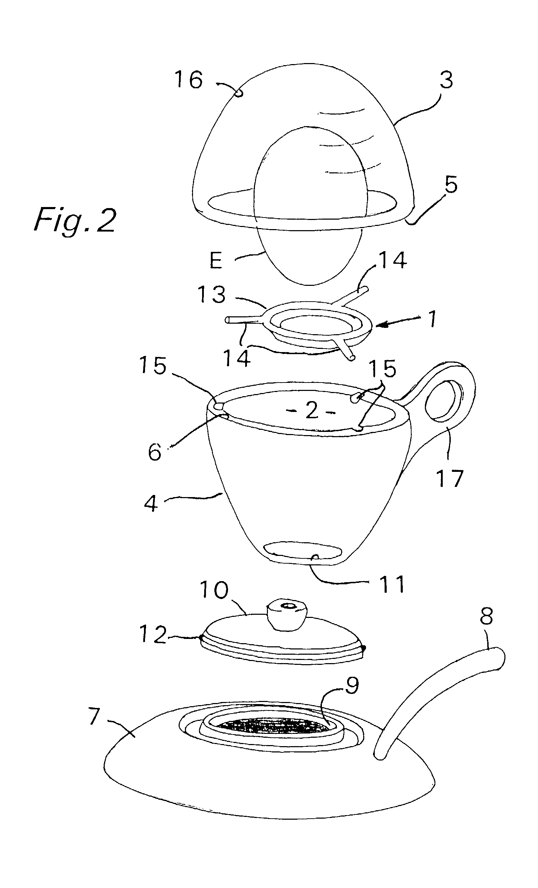

Referring to Figures 1 and 2, a stainless-steel carrier 1 for supporting a single egg E within its shell (Figure 2) upright within the egg-cooker, is located within a chamber 2 of substantially-ovoid form. The chamber 2 is defined by two semi-ovoid shell-members 3 and 4 which have abutting rims 5 and 6 respectively; the members 3 and 4 may be of heat-resistant glass (as illustrated) or plastics. The rims 5 and 6 abut one another with the shell-member 3 standing on the shell-member 4 and the shell-member 4 itself standing on a flat-base container-unit 7.

The unit 7, which has a heat-insulated handle 8, is hollow to contain water poured in through a top-opening 9; apart from the opening 9, the unit 7 is entirely closed. A nozzle 10 screws or snaps resiliently into the opening 9, and the shell-member 4 stands on the unit 7 with the nozzle 10 projecting upwardly into the chamber 2 through a base-opening 11 of the shell-member 4. A sealing ring 12 on the nozzle 10 ensures that there is a tight fit of the shell-member 4 with the nozzle 10 within the opening 11; it would be possible instead to provide the nozzle 10 as a snap-fit within the opening 11 or as an integral part of the lower shell-member 4.

The carrier 1 has a central ring 13 on which to load the egg E, together with three radially-extending support-arms 14. The loaded carrier 1 is placed on the shell-member 4 with the arms 14 located within respective grooves 15 in its upper rim 6. The shell-member 3 is then placed over the shell-member 4 with its rim 5 abutting the rim 6 to retain the arms 14 in their grooves 15 and close the chamber 2 upon the egg E. The egg E is in this regard supported away from the walls (shell-members 3 and 4) of the ovoid chamber 2, leaving a small free space surrounding it.

Cooking of the egg E is begun by applying heat to the container unit 7 to boil the water it contains; the unit 7 may in this regard be placed on a hot-plate or on a gas or electric cooking-ring. The steam generated by the boiling water passes under pressure through the nozzle 10 to be injected into the chamber 2 and surround the egg E.

The effect within the chamber 2 is comparable for efficiency of cooking, with that within a pressure-cooker, and such cooking may continue with application of heat to the unit 7 even though all the water has been boiled away.

The weight of the shell-member 3 may be sufficient to retain it against the build-up of steam pressure within the chamber 2. If this is not the case, then a mechanical interlock may be provided between the shell-members 3 and 4; as an alternative, provision may be made for the shell-members 3 and 4 to be held together using magnetic attraction. In all cases, however, it is generally necessary for safety to allow some steam to escape from the chamber 2 and thereby limit the pressure within. In the present case this is achieved by a small hole 16 in the shell-member 3, but as an alternative, a pressure-release valve may be provided on the unit 7 or on either shell-member 3 and 4.

The egg-cooker has advantage in allowing an egg to be cooked speedily, using minimum heat energy. The amount of water used and required to be heated may be just sufficient for the required degree of cooking, so that a high degree of efficiency in terms of time and heat-energy required, is obtained. Furthermore, when the egg is cooked, it may be carried to the breakfast (or other) table still on the carrier 1 within the shell-members 3 and 4, using the handle 8 and steadied by means of a handle 17 of the member 4. Moreover, the member 4 together with the carrier 1, may then be used after the member 3 has been lifted away, in the manner of an egg-cup holding the egg while it is consumed. By leaving the member 3 in place until the egg is to be consumed, the egg is kept hot and nicely steamy damp.

The shell-members 3 and 4 may be, as illustrated, transparent but this is not necessary. Accordingly they may be of opaque heat-resistant plastics, metal or ceramic. Furthermore, the water-container unit 7 may be of heat-resistant glass, ceramic or metal, being possibly of spun or other aluminium (to have a high heat-conductivity), or stainless steel. Where stainless steel rather than aluminium is used, a larger wall-thickness and thermal capacity are generally entailed, but whereas the result is a longer heat-up time, cooking will continue to take place to keep the egg hot longer, after the cooker is removed from the heat source. Once the water has been brought to the boil there may be sufficient stored heat to maintain the cooking action off the heat source.

The heat source, rather than being external as with a hot-plate or cooking-ring, may be provided by an electrical heater element incorporated in the unit 7 for mains or low-voltage energisation. As an alternative, the unit 7 may incorporate an electrical inductive ring for energisation from an external radiation source. In these latter respects, the unit 7 may be of any suitable non-metallic material, for example, of plastics, glass or ceramic. Furthermore, a bimetallic switch may be included in the electrical circuit of the heater element or inductive ring so that heating ceases when the water has boiled away.

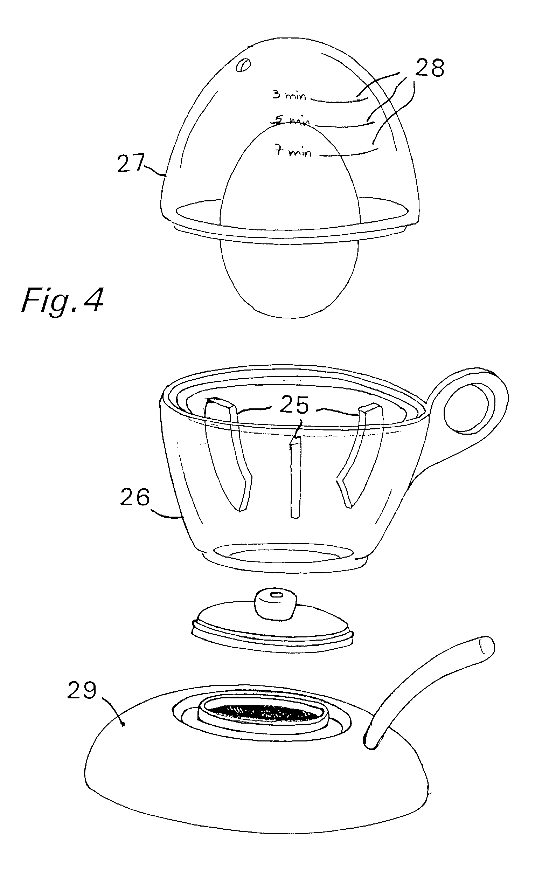

With the egg-cooker described above with reference to Figures 1 and 2 there may be the problem that a significant amount of steam condenses in the chamber 2 and the condensate, having accumulated in the bottom of the shell-member 4 within the opening 11, leaks out between the shell-member 4 and the unit 7. Figure 3 illustrates a modification of the water-container unit 7 and the base opening 11 of the shell-member 4 to deal with this problem.

Referring to Figure 3, the water-container unit 20 in this case incorporates an outer annular channel 21 for receiving the condensate, and the lower shell-member 22 has an enlarged-diameter bottom rim 23; the unit 20 does not need to be any larger in diameter than the unit 7. The rim 23 stands on (or is screwed or otherwise sealed, to) the outer rim 24 of the channel 21 so that the condensate runs down into the channel 21 to be re-boiled and converted to steam.

Furthermore, the egg-cooker of Figures 1 and 2 may be readily modified as illustrated in Figure 4 to avoid the need for a separate egg-carrier such as the carrier 1 described above. In this respect, and referring to Figure 4, the egg E is in this case supported on three shoulders 25 of a lower shell-member 26. The shoulders 25 project inwardly of the shell-member 26 to provide abutments on and against which the egg E rests to stand upright.

The upper shell-member 27 of the modified egg-cooker of Figure 4 is shown with graduations 28 that are related to its use, when inverted, as a measure for the amounts of water required to be poured into the water-container unit 29 in order to give 'soft-', 'medium-' and 'hard-boiled' results. The graduations 28 may, as illustrated, be marked with the cooking times which are appropriate to the achievement of these results.

## Claims

1. An egg-cooker in which a substantially-closed chamber (2) for close containment of an egg (E), has means (1; 25) for supporting the egg within the chamber (2) with space between the egg (E) and the chamber-wall, and provision is made for flow of a hot gaseous-fluid into said space to circulate therein and transfer heat to the egg to cook it, characterised in that a container (7; 29) for boiling water is coupled to the chamber (2) to pass steam into said space to cook the egg.

2. An egg-cooker according to Claim 1 wherein the container (7; 29) has a flat base to stand on a substantially horizontal surface, and the chamber (2) is defined by means (3,4; 27,26) that is carried by the container (7; 29) to extend substantially upright with respect to said surface.

3. An egg-cooker according to Claim 1 or Claim 2 wherein the container (7; 29) for boiling water is coupled to the chamber (2) via a nozzle (10) for injecting the steam into said space.

4. An egg-cooker according to any one of Claims 1 to 3 wherein the container (7; 29) is closed apart from its coupling (10) to the chamber (2), and the chamber (2) is closed to an extent to provide for build up of steam pressure therein.

5. An egg-cooker according to any one of Claim 1 to 4 wherein the chamber (2) is substantially ovoid in form.

6. An egg-cooker according to any one of Claims 1 to 5 wherein the chamber (2) is defined within two interengaged cup-shape shell-members (3,4; 27,26).

7. An egg-cooker according to Claim 6 wherein a first of the shell-members (4; 26) is mounted on the container (7; 29) and the second (3; 27) is selectively liftable away from the first (4; 26) for exposing one end of the egg (E) supported within the chamber (2).

8. An egg-cooker according to Claim 6 or Claim 7 wherein the shell-members (3,4; 27,26) abut one another in a substantially annular interface (5,6) to close the chamber (2).

9. An egg-cooker according to any one of Claims 1 to 8 wherein the means for supporting the egg (E) within the chamber is a carrier-member (1) which comprises a ring (13) for holding the egg (E) upright and means (14) for supporting the carrier-member within the chamber (2) spaced from the chamber-wall.

10. An egg-cooker according to any one of Claims 1 to 8 wherein the means for supporting the egg within the chamber (2) comprises inward projections (25) from the chamber-wall.
